# EUROPÄISCHE PATENTSCHRIFT

(11) **EP 1 916 498 B1**
(45) Veröffentlichungstag und Bekanntmachung des Hinweises auf die Patenterteilung: **27.05.2009**
(21) Anmeldenummer: 07020863.2
(22) Anmeldetag: 24.10.2007
(51) Int. Cl.: G01B 7/30, B21D 7/14

(54) **Verfahren zur Messung und/oder Korrektur der Werkstückform nach dem Umformen durch Biegen und Schwenkbiegemaschine zur Durchführung des Verfahrens**
Method for measuring and/or correcting a workpiece shape after shaping through bending and swivel bending machine for implementing the method
Procédé de mesure et/ou de correction de la forme d'une pièce à usiner selon la déformation par pliage et presse plieuse destinée à exécuter le procédé

(30) Priorität: 24.10.2006 DE 102006050687
(43) Veröffentlichungstag der Anmeldung: 30.04.2008
(73) Patentinhaber: Hans Schröder Maschinenbau GmbH, 82405 Wessobrunn-Forst (DE)
(72) Erfinder: Häring, Franz, 93073 Neutraubling (DE); Schröder, Sebastian, 82405 Wessobrunn/Forst (DE)
(74) Vertreter: Grättinger, Günter

(56) Entgegenhaltungen:
- WO-A-87/01625
- WO-A-94/19662
- JP-A- 2 017 404
- JP-A- 2000 005 823

## Beschreibung

Die Erfindung betrifft ein Verfahren gemäß dem Oberbegriff von Anspruch 1 sowie eine Schwenkbiegemaschine zur Durchführung des Verfahrens gemäß dem Oberbegriff von Anspruch 2.

Dabei wird die bei automatisierten Biegeprozessen an Werkstücken wie z.B. Blechen, Rohren, Drähten aus Metall oder anderen Materialien tatsächlich erreichte Verformung gemessen. Nach der Biegeverformung federt der Körper zurück, da die Verformung zum Teil elastisch ist. Die Größe der Rückfederung hängt von vielen Parametern des Materials und des Verformprozesses ab. Die tatsächliche Form des Werkstücks wird nach dem Stand der Technik üblicherweise a) durch Versuche ermittelt, b) aus Erfahrungswerten abgeschätzt oder c) durch Messung des Drehmoments und Anwendung der Federgesetze gefunden.

Wenn die tatsächliche Form des Werkstücks nach einem Biegevorgang bekannt ist, kann nach einem in EP 637371 A1 beschriebenen Verfahren die Differenz aus tatsächlicher und gewünschter Form ermittelt werden. Hierzu wird eine Winkelmessung bezüglich einer Basis durchgeführt, indem ein Paar Sensoren relativ zur Basis durch Federkraft ausgefahren werden, sodass sie während des Verformungsvorgangs am Werkstück anliegen. Aus der relativen Lage der Sensoren bezüglich der Basis resultiert ein genaues und reproduzierbares Messergebnis.

Ferner ist aus der WO 87/01625 A1 eine Rohrbiegemaschine bekannt, bei welcher nach automatischer Ermittlung eines bei einem Biegevorgang tatsächlich erreichten Biegewinkels im Falle einer Abweichung vom erwünschten Biegewinkel ein erneuter Biegevorgang zur Korrektur der Abweichung im erzielten Biegewinkel stattfindet.

Das der Erfindung zugrunde liegende Problem ist die Messung und Verwirklichung der tatsächlichen Form eines Werkstücks bei Biegeprozessen ohne zusätzliche Versuche und bei Verwendung einer robusten und kostengünstigen Vorrichtung.

Die erfindungsgemäße Lösung des Problems ergibt sich nach einem Verfahren gemäß Anspruch 1 und einer Vorrichtung gemäß Anspruch 2. Dabei wird ein erster Abschnitt des Werkstücks fest eingespannt, ein zweiter Abschnitt um eine Biegekante gebogen, indem ein Werkzeug um eine Drehachse geschwenkt wird, und ein gerader an die Biegung anschließender Teil des zweiten Abschnitts nach dem Biegevorgang bezüglich seiner Lage zum ersten Abschnitt vermessen, wobei im Bereich des geraden Teils des zweiten Abschnitts des Werkstücks wenigstens zwei Messpunkte mit unterschiedlichem Abstand zur Biegekante ermittelt werden, durch deren Verbindungsgerade sich der tatsächliche Biegewinkel ergibt und wobei anhand der ermittelten Verbindungsgeraden der tatsächlich erreichte Biegeradius als Abstand der ermittelten Verbindungsgeraden zur Drehachse errechnet wird.

Durch die erfindungsgemäße Lehre können Verformungsprozesse mit Biegemaschinen und -pressen mit hoher Genauigkeit durchgeführt werden. Gegenüber der manuellen Vermessung des Biegewinkels am Werkstück wird die benötigte Zeit für die Korrektur der Rückfederung verkürzt, die Anforderung an die Qualifikation des Personals herabgesetzt und Ausschuss weitgehend vermieden. Gegenüber den bekannten manuellen Verfahren, die nur den tatsächlich erreichten Winkel am Werkstück messen und daraus eine Korrektur des Biegewinkels zur Verbesserung des tatsächlich erreichten Winkelmaßes ermitteln, wird zusätzlich die Genauigkeit des tatsächlich erreichten Längenmaßes durch Korrektur der benötigten Zuschnittslänge und/oder Werkstücksposition verbessert, da neben dem erreichten Winkel am Werkstück auch der erreichte Radius indirekt durch die Bestimmung der Verbindungsgeraden ermittelt wird.

Bei der Ermittlung des Rückfederwegs können in einer Datenbank gespeicherte Erfahrungswerte früherer Biegeprozesse genutzt werden, deren Parameter möglichst identisch zu den Parametern des aktuellen Biegevorgangs sind. Bei Abweichungen in einzelnen Parametern kann zwischen mehreren Werten mit ähnlichen Parametern interpoliert werden. Dieses Verfahren hat den Vorteil, dass die Endstellung des beweglichen Werkzeugs noch vor dem Biegeprozess ermittelt werden kann und der folgende Biegeprozess häufig sofort zum gewünschten Ergebnis führt. Je mehr Erfahrungswerte die Datenbank enthält, desto genauer sind die erzielten Ergebnisse.

Im Folgenden wird anhand der Zeichnung eine vorteilhafte Ausführungsform der Erfindung an einer Schwenkbiegemaschine für Metallbleche beschrieben. Es zeigt
- Abb. 1: das ungebogene Werkstück,
- Abb. 2: das Werkstück nach dem Biegen,
- Abb. 3: das Werkstück nach dem Zurückfedern in die Messposition,
- Abb. 4: das Werkstück gemäß Abb. 3 in vergrößerter Darstellung,
- Abb. 5: den Verlauf der Verbindungsgeraden,
- Abb. 6: einen Taststift in vergrößerter Darstellung und
- Abb. 7: die angehobene Oberwange während des Messvor-gangs.

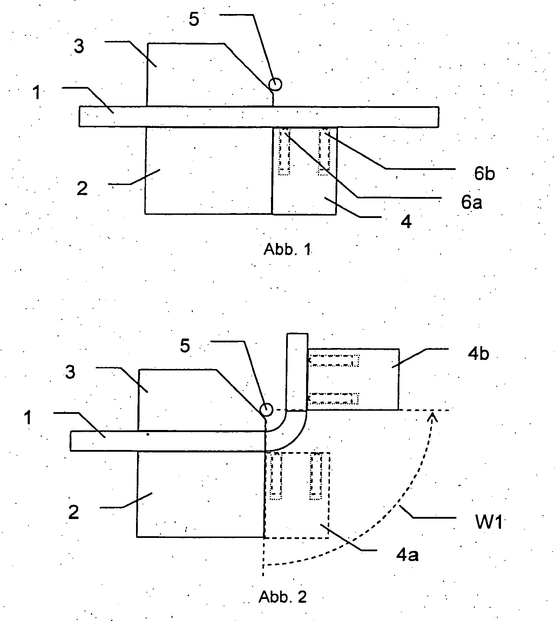

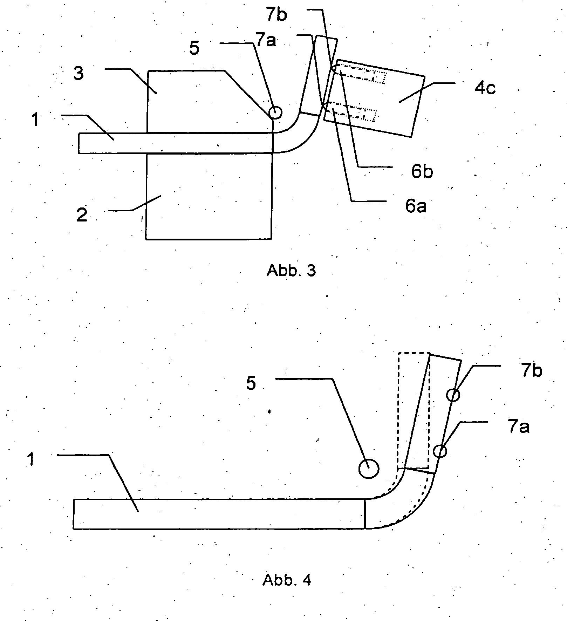

In Abb. 1 ist als zu verformendes Werkstück ein Metallblech 1 zwischen einer festen Unterwange 2 und einer das Blech fest klemmenden und während des Verformprozesses ebenfalls unbeweglichen Oberwange 3 eingespannt. Ein bewegliches Werkzeug in Form einer Biegewange 4 wird in einer Kreisbewegung um eine Drehachse 5 geschwenkt. Zwei gefedert gelagerte elektromechanische Taster 6a, 6b werden vom Metallblech 1 nach innen gedrückt. Für eine gewünschte Biegung des Werkstücks von z.B. 90° wird nach Abb. 2 die Biegewange 4 von ihrer Ausgangslage 4a um den Winkel W1 = 90° in die Endlage 4b gefahren. Dann wird nach Abb. 3 die Biegewange 4 vom Drehpunkt radial nach außen um einen vorbestimmten Weg, der etwas größer als die zu erwartende Radiusaufweitung ist, bewegt und so weit zurückgeschwenkt, bis die beiden gefedert gelagerten elektromechanischen Taster 6a, 6b nicht mehr betätigt sind. Ein Steuerungsprogramm überwacht während der Bewegung den Schaltzustand der Taster und die Position der Biegewange 4 und speichert die Positionen, bei denen der Schaltzustand wechselt. Aus den beiden Positionen und der Anordnung der Taster 6a, 6b können durch einfache geometrische Berechnungen die beiden Messpunkte 7a, 7b ermittelt werden, an denen die Spitzen der Taster das Werkstück berühren und die Taster gerade in der Position sind, in der der Schaltzustand wechselt. Diese beiden Messpunkte liegen an der Oberfläche des Werkstücks in Form des Metallblechs 1. Das Metallblech 1 ist in diesem Zustand bereits in seiner stabilen Endlage, da es nicht mehr von der Biegewange 4 berührt wird. Auf das Metallblech 1 wirken nur noch die geringen Kräfte der gefedert gelagerten Taster 6a, 6b, die jedoch vernachlässigt werden können.

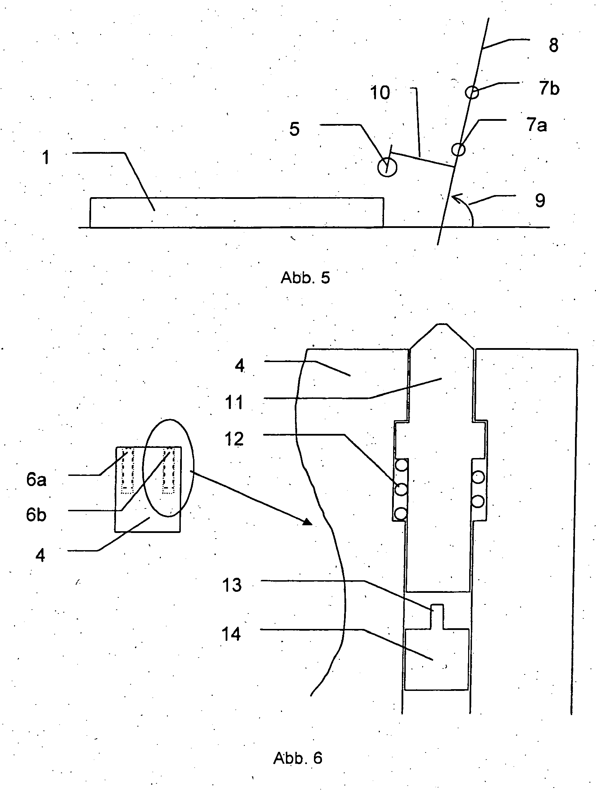

In Abb. 4 ist das Metallblech 1 im gewünschten Endzustand gestrichelt und im tatsächlichen Endzustand dargestellt. Die beiden ermittelten Messpunkte 7a, 7b auf der Blechoberfläche werden nach Abb. 5 verwendet, um eine Verbindungsgerade 8 zu konstruieren, die mit der Blechoberfläche im geraden Abschnitt zusammenfällt. Aus dem Verlauf der Verbindungsgeraden können durch einfache geometrische Berechnungen der tatsächliche Biegewinkel 9 und der tatsächliche Radius 10, der dem Abstand der Verbindungsgeraden 8 vom Drehpunkt 5 entspricht, ermittelt werden.

Die Differenz aus dem Schwenkwinkel W1 der Biegewange 4 und dem tatsächlichen Winkel 9 am Metallblech 1 kann bei zukünftigen Biegevorgängen, die unter gleichen Bedingungen ausgeführt werden, dem Schwenkwinkel als Korrektur hinzugerechnet werden, um den gewünschten Winkel tatsächlich zu erreichen. Die Bedingungen sind dann in einem Punkt geändert: Der Schwenkwinkel ist etwas größer. Um die Genauigkeit zu verbessern, kann der Messvorgang mit dem neuen, korrigierten Schwenkwinkel noch einmal ausgeführt werden und eine neue Korrektur ermittelt werden.

Der tatsächlich erreichte Radius 10 am Metallblech 1 wirkt sich auf das tatsächlich erreichte Außenmaß aus sowie auf die benötigte Zuschnittslänge des Blechs. Das gewünschte Außenmaß kann erreicht werden, indem die Position des Blechs um die Differenz aus gewünschtem und tatsächlich erreichtem Radius korrigiert wird. Die benötigte Zuschnittslänge wird ermittelt, indem für die Zuschnittsberechnung statt dem gewünschten Radius der tatsächlich erreichte Radius verwendet wird.

In Abb. 6 ist der Aufbau eines gefedert gelagerten elektromechanischen Tasters detailliert dargestellt. In der Biegewange 4 sind zwei solche Taster 6a, 6b integriert. Der rechte Taster 6b ist vergrößert und detailliert dargestellt. Ein runder Stößel 11 ist in einer Bohrung der Biegewange 4 beweglich gelagert. Er wird von einer Spiralfeder 12 nach außen gedrückt. Die Federkraft ist so ausgelegt, dass die Reibungskraft der Lagerung und die Gewichtskraft des Stößels sicher überwunden werden. Wird der Stößel vom Werkstück gegen die Federkraft nach innen gedrückt, dann drückt er auf den Stift 13 eines Präzisionsschalters 14, der eine Wiederholgenauigkeit von 1 Mikrometer hat.

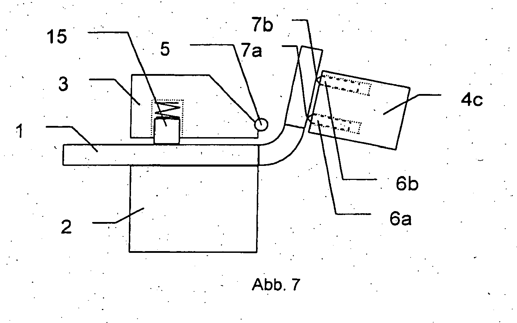

Infolge der Einspannung des Werkstücks wird kein vollständiger Spannungsabbau nach Beendigung des Biegevorgangs erreicht. Zur Verbesserung der Messgenauigkeit wird daher vorteilhaft die Einspannung vor dem Messen geringfügig gelöst, wie in Abb. 7 dargestellt. Damit das Werkstück nicht kippt, ist ein federnd aus der Oberwange 3 gegen das Werkstück ausfahrbarer Druckstift 15 vorgesehen.

In weiteren Realisierungen des erfindungsgemäßen Verfahrens können statt der beiden elektromechanischen Taster mit präzisen Schaltkontakten Abstandssensoren verwendet werden. Diese können als Kontakttaster mit Wegsensoren oder als berührungslose Sensoren ausgeführt sein. In diesem Fall braucht das Steuerungsprogramm nicht während der Bewegung die Position der Biegewange 4 und den Schaltzustand der Taststifte zu überwachen, sondern nach dem Freifahren der Biegewange 4 nur einmal den Abstand der beiden Sensoren zur Werkstückoberfläche zu messen.

## Patentansprüche

1. Verfahren zur Messung und/oder Korrektur der Werkstückform von Blechen, Rohren, Drähten oder dgl. nach deren Umformen durch Biegen, wobei ein erster Abschnitt des Werkstücks fest eingespannt, ein zweiter Abschnitt um eine Biegekante gebogen wird, indem ein Werkzeug um eine Drehachse (5) geschwenkt wird, und ein gerader an die Biegung anschließender Teil des zweiten Abschnitts nach dem Biegevorgang bezüglich seiner Lage zum ersten Abschnitt vermessen wird, wobei im Bereich des geraden Teils des zweiten Abschnitts des Werkstücks wenigstens zwei Messpunkte (7a, 7b) mit unterschiedlichem Abstand zur Biegekante ermittelt werden, durch deren Verbindungsgerade (8) sich der tatsächliche Biegewinkel (9) ergibt, und wobei die Differenz zwischen.dem gemessenen tatsächlichen Biegewinkel (9) und einem vorgegebenen Biegewinkel der Berechnung des Verformungswegs für einen nachfolgenden finalen oder iterativen Biegevorgang zugrunde gelegt wird,
**dadurch gekennzeichnet,**
**dass** anhand der ermittelten Verbindungsgeraden (8) der tatsächlich erreichte Biegeradius (10) als Abstand der ermittelten Verbindungsgeraden (8).zur Drehachse (5) errechnet wird, und dass dessen Differenz zu einem vorgegebenen Biegeradius bei der Ermittlung einer korrigierten Werkstückposition und/oder Zuschnittslänge des Werkstücks für einen nachfolgenden Biegevorgang zugrunde gelegt wird.

2. Schwenkbiegemaschine mit Einrichtung zur Messung und/oder Korrektur der Werkstückform von Blechen, Rohren, Drähten oder dergleichen nach deren Umformung durch Biegen, mit einer festen Unterwange (2) und einer ebenfalls unbeweglichen Oberwange (3) zum Einspannen eines ersten Abschnitts des Werkstücks (1), einer um eine Drehachse (5) schwenkbaren Biegewange (4) zum Biegen eines zweiten Abschnitts des Werkstücks (1) um eine Biegekante, wobei in die Biegewange (4) zum Ermitteln von wenigstens zwei Messpunkten (7a, 7b) mit unterschiedlichem Abstand zur Biegekante im Bereich des geraden Teils des zweiten Abschnitts des Werkstücks (1) wenigstens zwei Sensoren (6a, 6b) zur Abstandsmessung zwischen der Biegewange (4) und der Oberfläche des Werkstücks (1) eingebaut sind, und mit Mitteln zur Bestimmung des tatsächlichen Biegewinkels (9) durch Ermitteln der Verbindungsgeraden (8) durch die wenigstens zwei Messpunkte (7a, 7b),
**gekennzeichnet durch** Mittel zum Errechnen des tatsächlich erreichten Biegeradius (10) als Abstand der ermittelten Verbindungsgeraden (8) zur Drehachse (5).

3. Schwenkbiegemaschine nach Anspruch 2,
**dadurch gekennzeichnet,**
**dass** als Sensoren elektromechanische Taster (6a, 6b) vorgesehen sind, die mit elektrischen Schaltkontakten derart zusammenwirken, dass aus deren Position zum Schaltzeitpunkt relativ zur Biegewange (4) der jeweilige Messpunkt festgelegt ist.

4. Schwenkbiegemaschine nach Anspruch 3,
**dadurch gekennzeichnet,**
**dass** berührungslose Abstandssensoren zur Abstandsmessung vorgesehen sind, die bei Erreichen eines bestimmten Abstands schalten, sodass entsprechend der Stellung der Biegewange (4) zum Schaltzeitpunkt der jeweilige Messpunkt (7a, 7b) festgelegt ist.

## Claims

1. A method for measuring and/or correcting the work piece shape of sheets, pipes, wires or the like after they have been deformed via bending, wherein a first section of the work piece is rigidly clamped, a second section is bent around a bending edge by pivoting a tool around a rotational axis (5), and a straight portion of the second section following the bend is measured after the bending process in terms of its position relative to the first section, wherein at least two measuring points (7a, 7b) in the area of the straight portion of the second section of the work piece with a different distance from the bending edge are determined, the connecting lines (8) of which yield the actual bending angle (9), and wherein the difference between the measured actual bending angle (9) and a prescribed bending angle is used as the basis for calculating the deformation path for an ensuing final or iterative bending process, **characterized in that** the determined connecting lines (8) are used to calculate the actually achieved bending radius (10) as a distance of the determined connecting lines (8) from the rotational axis.(5), and that this difference relative to a prescribed bending radius is used as the basis when determining a corrected work piece position and/or blank length of the work piece for an ensuing bending process.

2. A swivel bending machine with a device for measuring and/or correcting the work piece shape of sheets, pipes, wires or the like after they have been deformed via bending, with a fixed lower cheek (2) and an also immovable upper cheek (3) for clamping a first section of the work piece (1), a bending cheek (4) that can be swiveled around a rotational axis (5) for bending a second section of the work piece (1) around a bending edge, wherein at least two sensors (6a, 6b) for measuring the distance between the bending cheek (4) and the surface of the work piece (1) are incorporated in the bending cheek (4) for determining at least two measuring points (7a, 7b) with a varying distance to the bending edge in the area of the straight portion of the second section of the work piece (1), and with means for determining the actual bending angle (9) by determining the connecting lines (8) via the at least two measuring points (7a, 7b), **characterized by** means for calculating the actually achieved bending radius (10) as the distance between the determined connecting lines (8) and the rotational axis (5).

3. The swivel bending machine according to claim 2, **characterized in that** electromechanical styluses (6a, 6b) are provided as the sensors, and interact with electrical switching contacts in such a way that the respective measuring point is determined from their position relative to the bending cheek (4) at the switching instant.

4. The swivel bending machine according to claim 3, **characterized in that** contactless distance sensors are provided for distance measurement, which switch after a specific distance has been reached, so that the respective measuring point (7a; 7b) is determined based on the position of the bending cheek (4) at the switching instant.

## Revendications

1. Procédé pour le mesurage et/ou la correction de la forme de pièces usinées telles que des tôles, des tuyaux, des fils de fer ou autres, après leur déformation par pliage, dans lequel une première section de la pièce usinée est serrée fort, une deuxième section est pliée sur une arête de pliage, en faisant pivoter un outil autour d'un axe de rotation (5), et une partie droite de la deuxième section, consécutive à la pliure, est mesurée quant à sa position par rapport à la première section, après le procédé de pliage, dans lequel au moins deux points de mesurage (7a, 7b), avec chacun un écart différent par rapport à l'arête de pliage, sont calculés dans la région de la partie droite de la deuxième section de la pièce usinée, dont la droite de jonction (8) donne l'angle de pliage réel (9), et dans lequel la différence entre l'angle de pliage réel (9) et un angle de pliage prédéterminé sert de base au calcul du parcours de déformation pour un procédé de pliage final ou itératif suivant,
**caractérisé en ce que**
les droites de jonction (8) calculées permettent de calculer le rayon de pliure (10) réellement atteint, an tant qu'écart de la droite de jonction (8) calculée par rapport à l'axe de rotation (5), et **en ce que** la différence de celui-ci par rapport à un rayon de pliure prédéterminé, lors du calcul d'une position corrigée d'une pièce usinée et/ou d'une longueur de découpe de la pièce usinée, sert de base à un procédé de pliage suivant.

2. Presse plieuse avec un dispositif pour le mesurage et/ou la correction de la forme de pièces usinées, telles que des tôles, des tuyaux, des fils de fer et autres, après leur déformation par pliage, avec une joue inférieure fixe (2) et une jour supérieure (3) également immobile (3) pour le serrage d'une première section de la pièce usinée (1), une joue de pliage (4) pivotante autour d'un axe de rotation (5), pour le pliage d'une deuxième section de la pièce usinée (1) sur une arête de pliage, dans laquelle au moins deux détecteurs (6a, 6b) pour le mesurage de l'écart entre la joue de pliage (4) et la surface de la pièce usinée (1) sont intégrés dans la joue de pliage (4), pour le calcul d'au moins deux points de mesurage (7a, 7b) avec chacun un écart différent par rapport à l'arête de pliage dans la région de la partie droite de la deuxième section de la pièce usinée (1), et avec des moyens pour la détermination de l'angle de pliage réel (9) par le calcul de la droite de jonction par les au moins deux points de mesurage (7a, 7b),
**caractérisée par**
des moyens pour le calcul du rayon de pliage (10) réellement atteint, en tant qu'écart entre la droite de jonction calculée (8) et l'axe de rotation (5).

3. Presse plieuse selon la revendication 2,
**caractérisée en ce que**
en tant que détecteurs sont prévus des palpeurs électromécaniques (6a, 6b), qui coopèrent de telle manière avec des contacts électriques de commutation, que le point de mesurage correspondant est défini à partir de leur position par rapport à la jour de pliage (4) au moment de la commutation.

4. Presse plieuse selon la revendication 3,
**caractérisée en ce que**
des détecteurs d'écart sans contact sont prévus pour le mesurage de l'écart, qui commutent lors de l'atteinte d'un certain écart, de sorte que le point de mesurage (7a, 7b) correspondant est défini en fonction de la position de la jour de pliage (4) au moment de la commutation.
